# EUROPEAN PATENT SPECIFICATION

(11) **EP 3 637 392 B1**
(45) Date of publication and mention of the grant of the patent: **26.05.2021**
(21) Application number: 19202652.4
(22) Date of filing: 11.10.2019
(51) Int. Cl.: G09F 3/20, G09F 3/03

(54) **RFID LABEL TAG FOR AUTHENTICATION OF A PLANT CONTAINER**
RFID-ETIKETT-TAG ZUR AUTHENTIFIZIERUNG EINES PFLANZENBEHÄLTERS
ÉTIQUETTE RFID D'AUTHENTIFICATION D'UN RÉCIPIENT DE PLANTE

(30) Priority: 12.10.2018 NL 2021806
(43) Date of publication of application: 15.04.2020
(73) Proprietor: Container Centralen A/S, 5250 Odense, SV (DK)
(72) Inventor: FERGUSON, Donald, Alliston, Ontario Alliston (CA); HOLMGAARD, Jens, 9240 Nibe (DK); KINGTON, Anthony Victor, Four Marks, Alton Hampshire GU34 5JJ (GB); HEWET, David Edward, ChengYang District, Qindao Shandong 266000 (CN); VILNER, Charles, Crawley, West Sussex RH10 1QD (GB); BOUZAKIS, Antonios, 10434 Athene (GR); VAN DER BROEK, Anja Hilda, 2161 BL Lisse (NL); SMITS, Leonardus Adrianus Maria, 2391 DE Hazerswoude-Dorp (NL)
(74) Representative: Van Breda, Jacobus

(56) References cited:
- JP-A- 2016 090 867
- KR-A- 20180 100 756
- US-A1- 2006 170 559
- US-A1- 2010 253 524
- US-A1- 2011 023 343

## Description

The invention relates to a RFID label tag for authentication of a plant container comprising a loop that is dimensioned to snugly fit around a part of the plant container, said RFID label tag comprising further a flat part connected to the loop, wherein the flat part is provided with a RFID chip.

As from 1976 the applicant provides a system with plant containers to the market embodying a returnable transport item solution. At the time there are 3 ½ million containers in use and 22 million shelves for these containers. Approximately 100,000 users across 22 countries in Europe and elsewhere make use of this system. A problem is that counterfeit containers have entered the market which are of low quality and are the cause of severe problems in the supply chain. The applicant is responsible for repair and maintenance of the containers and the users of the system have agreed to contracts which provides the applicant the required funding for maintaining the system at the desired high quality level. The counterfeit containers are however not subject to contract payments, and this is forming a threat to the system considering that the number of counterfeits is estimated at more than 10% of the total number of containers in the market and potentially growing.

To ensure authentication of the plant containers that participate in the system mentioned in the previous paragraph, the containers are provided with a RFID label tag comprising a loop that is dimensioned to snugly fit around a part of the plant container, said RFID label tag comprising further a flat part connected to the loop, wherein the flat part is provided with a RFID chip. The problem with this existing RFID label tag is that it can be relatively easy removed from an authentic plant container and placed on a counterfeit one. This is of course detrimental for the reliability of and trust in the system, apart from the fact that maintenance of these counterfeits that are falsely provided with a conventional RFID label tag is still not paid for.

US2011/0023343 discloses an RFID label tag suitable for authentication of a plant container comprising a loop that is dimensioned to snugly fit around a part of the plant container and provided with the features of the preamble of claim 1, i.e. said RFID label tag comprising a flat part connected to the loop, wherein the flat part is provided with a RFID chip, and wherein the RFID label tag comprises a pre-mounted form wherein the loop is open to receive a part of the plant container and wherein the flat part is separated into two flat part halves, said flat part halves being connected to the loop on opposite sides thereof, and a mounted form wherein the loop is closed and arranged to snugly fit around the part of the plant container when the two flat part halves are joined together, wherein the two flat part halves are provided with a label inlay supported by the two flat part halves, wherein the label inlay is glued to the two flat part halves. Essential to US2011/0023343 is that the tag comprises: a first component having a proximal portion and a distal portion; a second component having a proximal portion and distal portion, an implant receiving cavity formed by the distal portion of the first component and the distal portion of the second component, wherein a planar surface is formed by the proximal portion of the first component and the proximal portion of the second component, which planar surface extends from the implant receiving cavity such that the planar surface is substantially transverse to a longitudinal axis of the implant received within the implant receiving cavity, the planar surface including indicia.

It is an object of the invention to provide a RFID label tag which is as much as possible resistant to tampering, and in general can only be removed from an authentic plant container at the expense of irreparable damage to the RFID label tag which then provides visible proof of tampering.

The RFID label tag of the invention is therefore provided with one or more features mentioned in the appended claims.

In a first aspect of the invention the two flat part halves of the RFID label tag are provided with a label inlay supported by the two flat part halves, wherein the label inlay is glued to the two flat part halves and a surface of the label inlay facing away from the two flat part halves on which the label inlay is glued is also provided with glue so as to arrange that when the two flat part halves are joined together, the surface of the label inlay that faces away from the two flat part halves is glued to itself.

In a second aspect of the invention the two flat part halves each support a part or parts of an antenna, which parts of the antenna all connect to the RFID chip when the two flat part halves are joined together, and wherein in the pre-mounted form only one part of said antenna connects to the RFID chip. Only an authentic RFID label tag is provided with this feature wherein the full reach of the antenna becomes available when the two flat part halves are joined together, and this reach is tremendously reduced when the two flat part halves are separated. It is however still possible in the pre-mounted form of the RFID label tag when the two flat part halves are separated to communicate with the RFID chip, because then one part of the antenna is still connected to the RFID chip.

Wherein the two flat part halves are joined together, it is preferable that between said two flat part halves a foam is sandwiched to prevent water ingress. The foam is preferably a closed cell 0.8 mm foam which provides IP 68 water ingress protection. This ensures consistency of RF performance in outdoor conditions.

Further the label inlay preferably comprises both the antenna and the RFID chip, so that tampering with the label inlay will adversely affect the ability of the RFID label tag to operate.

Preferably said label inlay is provided with a herringbone die-cut structure. Tampering with this label inlay, particularly for instance an effort to remove the label inlay from the two flat part halves will destroy it due to the herringbone die-cut structure providing weak spots that will tear due to the glue connecting the label inlay to the two flat part halves and to itself.

Beneficially the label inlay comprises an aperture providing room for the plurality of anti-wear ribs. This construction ensures that cutting the loop will also cut the antenna so that the RFID label tag will be irreparably damaged.

Still another preferred feature is that the pre-mounted form is arranged to represent the preferred form of the RFID label tag, such that when the RFID label tag is not mounted, it automatically assumes this pre-mounted form. Conversely when the RFID label tag is moved into the mounted condition, the loop is under stress and trying to tamper with his loop will then cause it to break.

Advantageously the loop and the two flat part halves are substantially made from polycarbonate, in particular ABT material. This material is transparent and therefore reveals all the parts of the RFID tag label, including particularly the RFID chip. Because of that, merely copying the RFID label tag to get a copy of the label inlay will not be possible without noticing from the copy that it is indeed a copy due to the fact that the RFID antenna will blur the image and spoil the appearance of the copy.

In another aspect of the RFID label tag of the invention at least a first one of the flat part halves has a first protrusion that snugly fits in and extends through an aperture provided in the second one of the flat part halves when the two flat part halves are joined together. This feature makes tampering of the loop with for instance a screwdriver difficult without also damaging the loop of the RFID label tag.

It is preferred that adjacent to the first protrusion and at its side facing away from the loop a second protrusion is provided with a smaller size than the first protrusion, wherein the second protrusion is equipped with a hook part to snap behind an edge of the aperture. This second protrusion hinders tampering of the first protrusion from a side distant from the loop, whereas the hook part of the second protrusion also supports a reliable closure of the RFID label tag when the two flat part halves are joined together.

Securing the joining of the two part halves is further promoted by the feature that at least one of the two flat part halves is provided with multiple hook shaped clips that when the two flat part halves are joined together snap behind edges of the other one of the two flat part halves.

Further preferably the two flat part halves have extremities that are distant from the loop which are provided with cooperating closure facilities to secure the mounted form of the RFID label tag.

In a suitable embodiment the cooperating closure facilities comprise on the one part a peg and on the other part a receptacle for the peg, wherein the peg comprises a head supported by two pillars mounted on one of the two flat part halves, and wherein the receptacle is provided with a collar surrounding the receptacle on the other one of the two flat part halves to guide the head to be received in the receptacle, and wherein the head is dimensioned to fit within the collar and the receptacle.

It is preferred that the pillars are mounted on supports provided on one of the two flat part halves, and in particular it is preferred that the pillars are dimensioned to break when a predetermined lateral force is applied to the head. This again is a feature that supports the possibility to visibly notice that efforts have been made to tamper with the RFID label tag of the invention.

Beneficially at its inside the collar is provided with inwardly converging edges that narrow the aperture such that the pillars fit between the edges when the head on the pillars is pushed into the collar and receptacle beyond the edges.

Other notable features are that an outer surface of the loop of the RFID label tag is provided with one or more ribs following at least in part the loops curvature. This has the dual purpose of making a cut through the loop difficult, and when nevertheless the loop has been cut to make reparation of the loop with a tape cumbersome or impossible, since the ribs will prevent that the tape fill nicely adhere to the loops outer circumference.

There are different options how the ribs can be oriented, but preferably the one or more ribs have a radius of curvature wherein a center point of the radius coincides with an imaginary axis around which the loop is curved.

It is particularly preferred that the RFID label tag comprises a plurality of parallel ribs following at least in part the loops curvature.

Another aspect of the RFID label tag of the invention is that an inner surface of the loop is provided with a plurality of anti-wear ribs. This supports that in practice the RFID label tag can without harm frequently be moved while it is mounted on a plant container without making the RFID label tag more sensitive to tampering.

The invention is also embodied in a plant container provided with an RFID label tag according to the invention.

The invention will hereinafter be further elucidated with reference to the drawing of an exemplary embodiment of a RFID label tag according to the invention that is not limiting as to the appended claims.

In the drawing:
- figure 1 and figure 2 shows a RFID label tag according to the invention in open and closed condition respectively;
- figures 3, 4 and 5 show in different views the outside surface of the loop of the RFID label tag according to the invention;
- figure 6 and figure 7 show different views at the inside surface of the loop of the RFID label tag according to the invention;
- figure 8 and figure 9 show a detailed view of the loop of the RFID label tag of the invention in closed and open condition respectively;
- figure 10 and figure 11 show a flat part half and an assembled flat part respectively of the RFID label tag of the invention;
- figure 12 shows an inlay to be provided in and supported by the two flat part halves of the RFID label tag of the invention; and
- figures 13 - 17 shows the closure facilities of the two flat part halves distant from the loop of the RFID label tag of the invention.

Whenever in the figures the same reference numerals are applied, these numerals refer to the same parts.

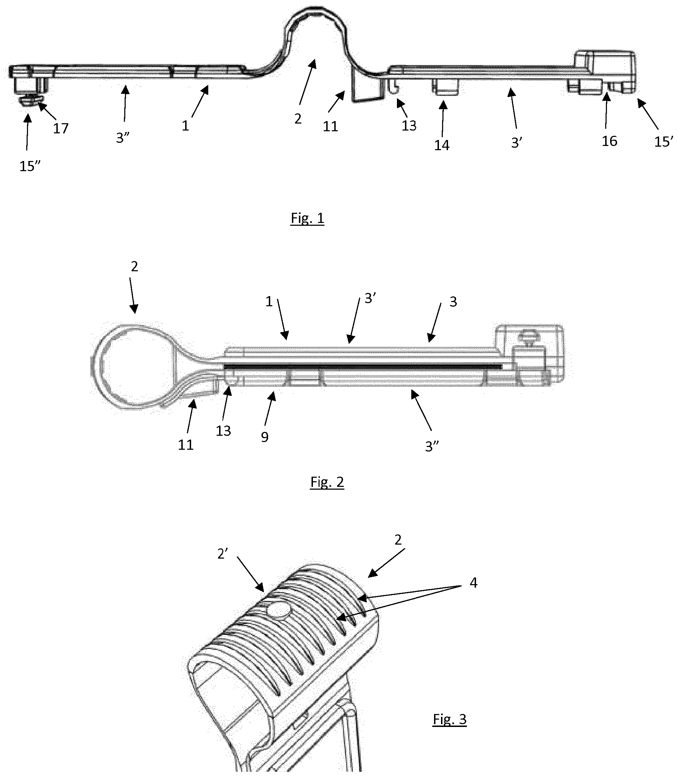

Making first reference to figure 1 and figure 2, a RFID label tag 1 according to the invention is shown in open or pre-mounted condition (figure 1) and closed or mounted condition (figure 2) respectively, albeit without showing the plant container for which the RFID label tag 1 is intended. This RFID label tag 1 is intended for authentication of such plant container and comprises a loop 2 that is dimensioned to snugly fit around a part of the plant container. The RFID label tag 1 further comprises a flat part 3 connected to the loop 2, wherein the flat part 3 is provided with a RFID chip.

The pre-mounted form as shown in figure 1 is arranged to represent the preferred form or shape of the RFID label tag 1, such that when not mounted the RFID label tag 1 automatically assumes this pre-mounted form or shape.

Turning now to figures 3, 4 and 5 it is shown that an outer surface 2' of the loop 2 is provided with a series of ribs 4 following at least in part the curvature of the loop 2. It is further clear that the ribs 4 are essentially parallel to each other. The ribs 4 have a radius of curvature wherein a center point of the radius coincides with an imaginary axis around which the loop 2 is curved. This is clear for the skilled person when looking at figure 3.

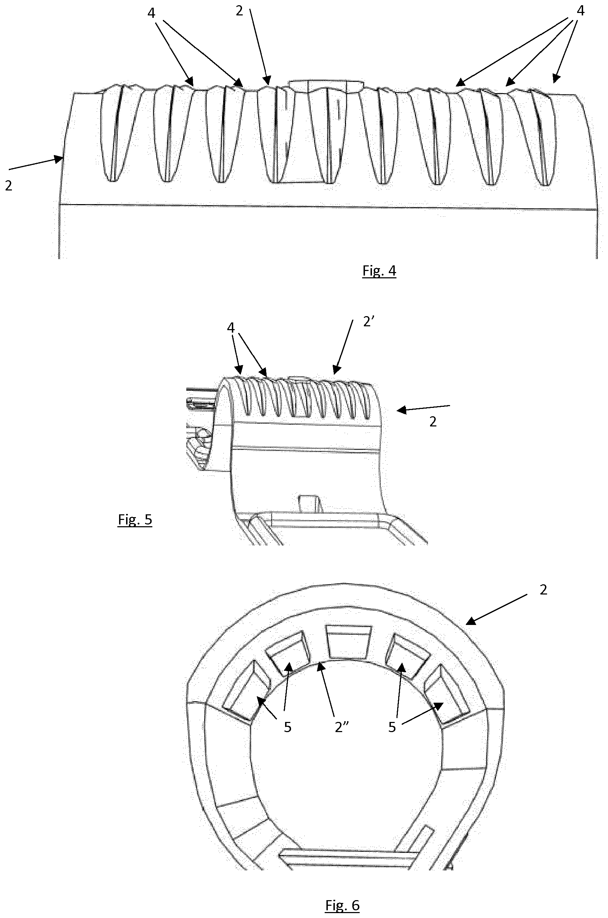

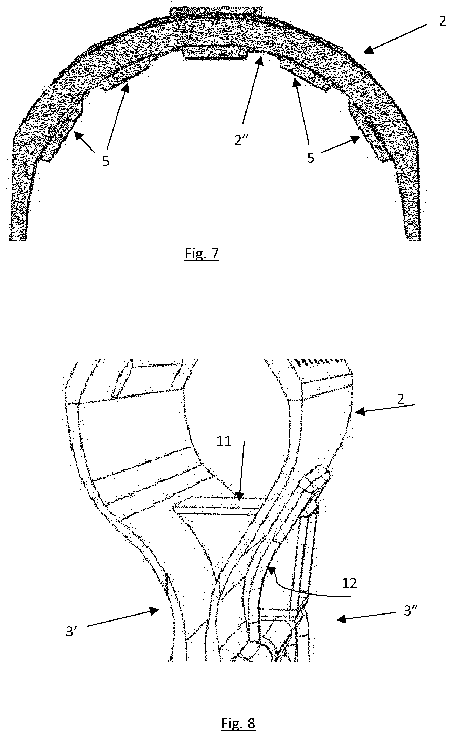

Figure 6 and figure 7 show that an inner surface 2" of the loop 2 is provided with a plurality of anti-wear ribs 5.

Turning again to figure 1 and figure 2 it is shown that the RFID label tag 1 according to the invention comprises a pre-mounted form as shown in figure 1, wherein the loop 2 is open to receive a part of the plant container and wherein the flat part 3 is separated into two flat part halves 3', 3". Said flat part halves 3', 3" are connected to the loop 2 on opposite sides of the loop 2. Figure 2 shows the RFID label tag 1 of the invention in a mounted form wherein the loop 2 is closed and arranged to snugly fit around the part of a plant container (not shown), and wherein the two flat part halves 3', 3" are joined together. It is further remarked that the loop 2 and the two flat part halves 3', 3" are substantially made from polycarbonate, in particular and preferably transparent ABT material.

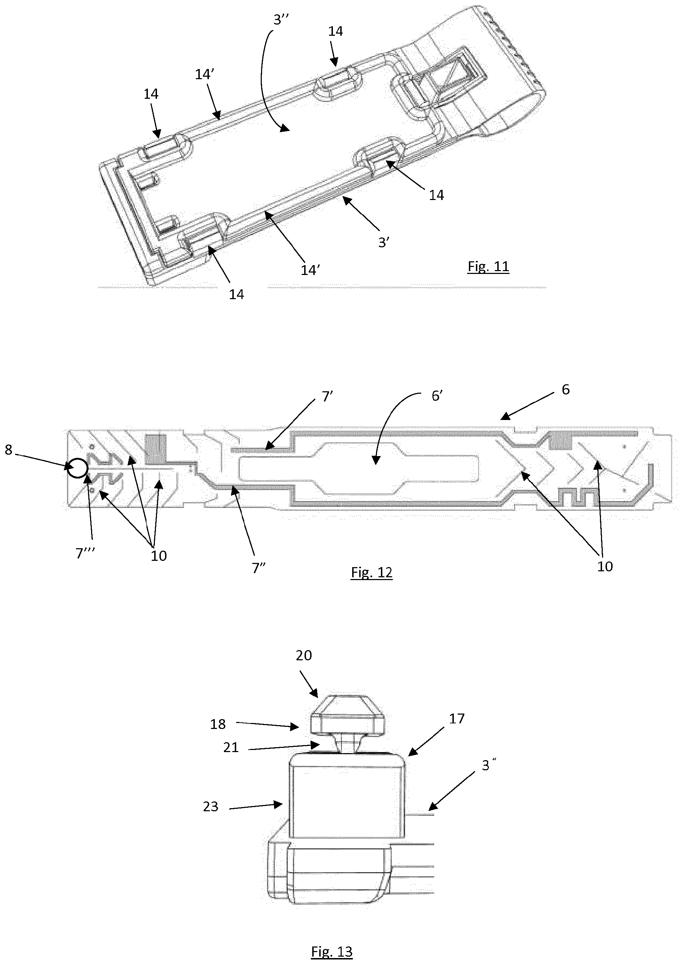

Turning now first to figure 12, this figure 12 shows an inlay 6 to be provided in and supported by the two flat part halves 3', 3" of the RFID label tag 1 of the invention. The label inlay 6 is glued to the two flat part halves 3', 3" and a surface of the label inlay 6 facing away from the two flat part halves 3', 3" is provided with glue so as to arrange that when the two flat part halves 3', 3" are joined together as shown in figure 2, the surface of the label inlay 6 is glued to itself. Figure 12 shows the inlay 6 being straight which corresponds with the pre-mounted condition of the RFID label tag 1 as shown in figure 1. The label inlay 6 comprises the antenna parts 7', 7", 7'" and the RFID chip 8. The label inlay 6 is further provided with a herringbone die-cut 10 structure.

By providing the inlay 6 in the flat part halves 3', 3" and have it supported by said flat part halves 3', 3" of the RFID label tag 1, the two flat part halves 3', 3" support the parts 7', 7", 7"' of the antenna, which parts of the antenna both connect to the RFID chip 8 when the two flat part halves 3', 3" are joined together. In the pre-mounted form however, only one part 7"' of said antenna connects to the RFID chip 8.

Figure 2 shows that wherein the two flat part halves 3', 3" are joined together, between said two flat part halves 3', 3" a foam 9 is sandwiched to prevent water ingress. The foam 9 is preferably a closed cell 0.8 mm foam which provides IP 68 water ingress protection. This ensures consistency of RF performance in outdoor conditions.

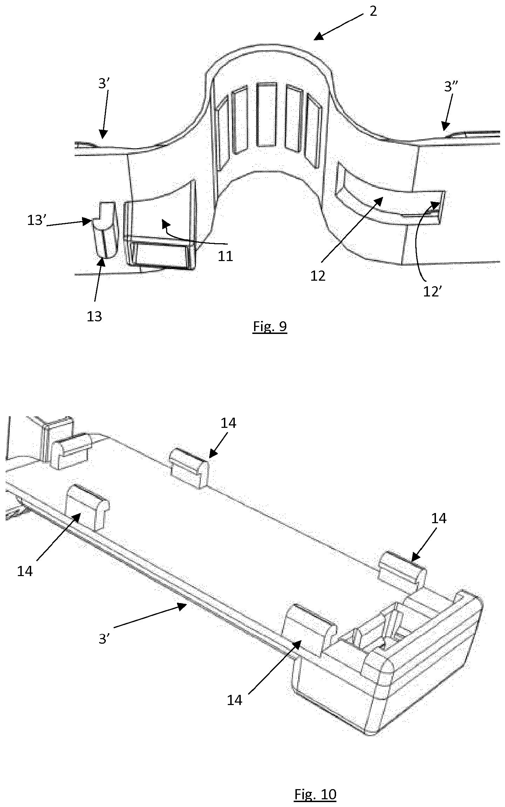

Turning now again to figure 1 and in particular to the detailed figures 8 and 9 it is shown that at least a first flat part half 3' of the two flat part halves 3', 3" has a first protrusion 11 that, when the loop 2 is closed, snugly fits in and extends through an aperture 12 provided in the second flat part half 3" of the flat part halves, that is to say when the two flat part halves 3', 3" are joined together.

It is further shown that adjacent to the first protrusion 11 and at its side facing away from the loop 2 a second protrusion 13 is provided with a smaller size than the first protrusion 11, wherein the second protrusion 13 is equipped with a hook part 13' to snap behind an edge 12' of the aperture 12.

In figure 10 is shown that one flat part half 3 is provided with multiple hook shaped clips 14, wherein when the two flat part halves 3', 3" are joined together as shown in figure 11 the hook shaped clips 14 snap behind edges of the other flat part half 3" of the two flat part halves 3', 3". Figure 11 further shows that the two flat part halves 3', 3" have ridges 14' that protect the clips 14 against tampering.

As another aspect figure 1 shows that the two flat part halves 3', 3" have extremities 15', 15" that are distant from the loop 2, and that these extremities 15', 15" are provided with closure facilities 16, 17 that are shown in figure 2 to cooperate in order to secure the mounted form of the RFID label tag 1. A detailed view at these closure facilities 16, 17 is provided by figures 13 - 17.

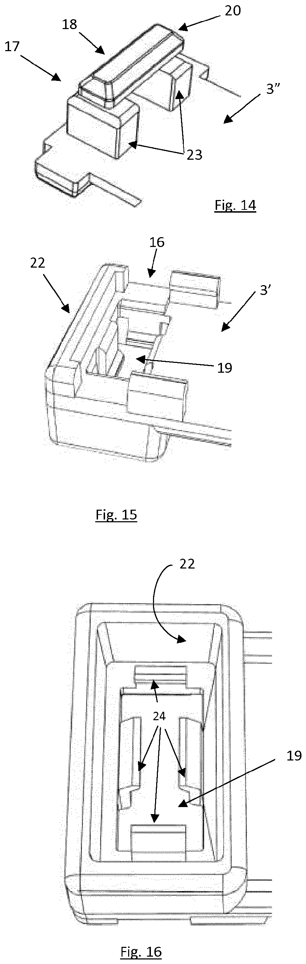

With reference to said figures 13 - 17 the cooperating closure facilities 16, 17 are shown to comprise on the one part a peg 18 and on the other part a receptacle 19 for the peg 18, wherein figure 13 and figure 14 show that the peg 18 comprises a head 20 supported by two pillars 21 mounted on one flat part half 3'' of the two flat part halves 3', 3". The pillars 21 are mounted on supports 23 provided on one flat part half 3" of the two flat part halves 3', 3". Preferably the pillars 21 are dimensioned to break when a predetermined lateral force is applied to the head 20.

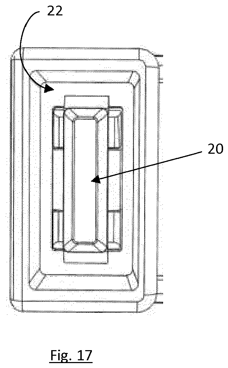

Figures 15, 16 and 17 show that the receptacle 19 for the head 20 is provided with a collar 22 surrounding the receptacle 19 on the other flat part half 3' of the two flat part halves 3', 3" to guide the head 20 when it is to be received in the receptacle 19. Of course the head 20 is dimensioned to fit within the collar 22. Figure 16 shows the receptacle 19 before the head 20 is introduced in this receptacle 19, whereas figure 17 shows the receptacle 19 after it has received the head 20.

Figure 16 clearly shows that at its inside the collar 22 is provided with inwardly converging edges 24 that narrow the aperture 19 such that the pillars 21 will fit between the edges 24 when - as figure 17 shows - the head 20 on the pillars 21 is pushed into the collar 22 and the receptacle 19 beyond the edges 24.

Although the invention has been discussed in the foregoing with reference to an exemplary embodiment of the RFID label tag of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. RFID label tag (1) for authentication of a plant container comprising a loop (2) that is dimensioned to snugly fit around a part of the plant container, said RFID label tag (1) comprising further a flat part (3) connected to the loop (2), wherein the flat part (3) is provided with a RFID chip (8), wherein the RFID label tag (1) comprises a pre-mounted form wherein the loop (2) is open to receive a part of the plant container and wherein the flat part (3) is separated into two flat part halves (3', 3"), said flat part halves (3', 3") being connected to the loop (2) on opposite sides thereof, and a mounted form wherein the loop (2) is closed and arranged to snugly fit around the part of the plant container when the two flat part halves (3', 3") are joined together, wherein the two flat part halves (3', 3") are provided with a label inlay (6) supported by the two flat part halves (3', 3"), wherein the label inlay (6) is glued to the two flat part halves (3', 3"), **characterized in that** a surface of the label inlay (6) facing away from the two flat part halves (3', 3") on which the label inlay (6) is glued is also provided with glue so as to arrange that when the two flat part halves (3', 3") are joined together, the surface of the label inlay (6) facing away from the two flat part halves (3', 3") is glued to itself.

2. RFID label tag according to claim 1, **characterized in that** the two flat part halves (3', 3") each support a part or parts of an antenna (7', 7", 7"'), which parts of the antenna all connect to the RFID chip (8) when the two flat part halves (3', 3") are joined together, and wherein in the pre-mounted form only one part (7"') of said antenna (7', 7", 7"') connects to the RFID chip (8).

3. RFID label tag according to claim 1 or 2, **characterized in that** wherein the two flat part halves (3', 3") are joined together, between said two flat part halves (3', 3") a foam (9) is sandwiched to prevent water ingress.

4. RFID label tag according to any one of claims 1 - 3, **characterized in that** the label inlay (6) comprises the antenna (7', 7", 7"') and the RFID chip (8).

5. RFID label tag according to any one of claims 1 - 4, **characterized in that** the label inlay (6) is provided with a herringbone die-cut (10) structure.

6. RFID label tag according to any one of claims 1 - 5, **characterized in that** an inner surface (2") of the loop (2) is provided with a plurality of anti-wear ribs (5), and the label inlay (6) comprises an aperture (6') providing room for the plurality of anti-wear ribs (5).

7. RFID label tag according to any one of claims 1 - 6, **characterized in that** the pre-mounted form is arranged to represent the preferred form of the RFID label tag (1), such that when not mounted the RFID label tag (1) automatically assumes the pre-mounted form.

8. RFID label tag according to any one of claims 1 - 7, **characterized in that** the loop (2) and the two flat part halves (3', 3") are substantially made from polycarbonate, in particular ABT material.

9. RFID label tag according to any one of claims 1 - 8, **characterized in that** at least a first flat part half (3') of the flat part halves (3', 3") has a first protrusion (11) that snugly fits in and extends through an aperture (12) provided in a second flat part half (3") of the flat part halves (3', 3") when the two flat part halves are joined together.

10. RFID label tag according to claim 9, **characterized in that** adjacent to the first protrusion (11) and at its side facing away from the loop (2) is a second protrusion (13) with a smaller size than the first protrusion (11), wherein the second protrusion (13) is equipped with a hook part (13') to snap behind an edge (12') of the aperture (12).

11. RFID label tag according to any one of claims 1 - 10, **characterized in that** at least one flat part half (3') of the two flat part halves (3', 3") is provided with multiple hook shaped clips (14) that when the two flat part halves (3', 3") are joined together snap behind edges of the other flat part half (3") of the two flat part halves (3', 3").

12. RFID label tag according to any one of claims 1 - 11, **characterized in that** the two flat part halves (3', 3") have extremities (15', 15") that are distant from the loop (2) which are provided with cooperating closure facilities (16, 17) to secure the mounted form of the RFID label tag (1).

13. RFID label tag according to claim 12, **characterized in that** the cooperating closure facilities (16, 17) comprise on the one part a peg (18) and on the other part a receptacle (19) for the peg (18), wherein the peg (18) comprises a head (20) supported by two pillars (21) mounted on one flat part half (3") of the two flat part halves (3', 3"), and wherein the receptacle (19) is provided with a collar (22) surrounding the receptacle (19) on the other flat part half (3') of the two flat part halves (3', 3") to guide the head (20) to be received in the receptacle (19), and wherein the head (20) is dimensioned to fit within the collar (22) and receptacle (19) .

14. RFID label tag according to claim 13, **characterized in that** the pillars (21) are mounted on supports (23) provided on one flat part half (3") of the two flat part halves (3', 3").

15. RFID label tag according to claim 13 or 14, **characterized in that** the pillars (21) are dimensioned to break when a predetermined lateral force is applied to the head (20).

## Patentansprüche

1. RFID-Etikett-Tag (1) zur Authentifizierung eines Pflanzgefäßes, das eine Schleife (2) aufweist, die so dimensioniert ist, dass sie eng um einen Teil des Pflanzgefäßes passt, wobei das RFID-Etikett-Tag (1) weiterhin einen flachen Teil (3) aufweist, der mit der Schleife (2) verbunden ist, wobei der flache Teil (3) mit einem RFID-Chip (8) versehen ist, wobei der RFID-Etikett-Tag (1) eine vormontierte Form aufweist, wobei die Schleife (2) offen ist, um einen Teil des Pflanzgefäßes aufzunehmen, und wobei der flache Teil (3) in zwei flache Teilhälften (3', 3") geteilt ist, wobei die flachen Teilhälften (3', 3") mit der Schleife (2) an deren gegenüberliegenden Seiten verbunden sind, und eine montierte Form, bei der die Schleife (2) geschlossen und so angeordnet ist, dass sie eng um den Teil des Pflanzgefäßes passt, wenn die beiden flachen Teilhälften (3', 3") zusammengefügt sind, wobei die beiden flachen Teilhälften (3', 3'') mit einem Etikett-Inlay (6), das durch die beiden flachen Teilhälften (3', 3") getragen wird, versehen sind, wobei das Etikett-Inlay (6) an die beiden flachen Teilhälften (3', 3") geklebt ist, **dadurch gekennzeichnet, dass** eine den beiden flachen Teilhälften (3', 3") abgewandte Oberfläche des Etikett-Inlays (6), auf die das Etikett-Inlay (6) geklebt ist, ebenfalls mit Klebstoff versehen ist, um dafür zu sorgen, dass, wenn die beiden flachen Teilhälften (3', 3") zusammengefügt werden, die den beiden flachen Teilhälften (3', 3'') abgewandte Oberfläche des Etikett-Inlays (6) mit sich selbst verklebt wird.

2. RFID-Etikett-Tag nach Anspruch 1, **dadurch gekennzeichnet, dass** die beiden flachen Teilhälften (3', 3") jeweils einen Teil oder Teile einer Antenne (7', 7", 7"') tragen, wobei die Teile der Antenne alle mit dem RFID-Chip (8) verbunden sind, wenn die beiden flachen Teilhälften (3', 3") zusammengefügt sind, und wobei in der vormontierten Form nur ein Teil (7"') der Antenne (7', 7", 7"') mit dem RFID-Chip (8) verbunden ist.

3. RFID-Etikett-Tag nach Anspruch 1 oder 2, **dadurch gekennzeichnet, dass** wenn die beiden flachen Teilhälften (3', 3'') miteinander verbunden sind, ein Schaum (9) sandwichartig zwischen den beiden flachen Teilhälften (3', 3") angeordnet ist, um das Eindringen von Wasser zu verhindern.

4. RFID-Etikett-Tag nach einem der Ansprüche 1 - 3, **dadurch gekennzeichnet, dass** das Etikett-Inlay (6) die Antenne (7', 7", 7"') und den RFID-Chip (8) aufweist.

5. RFID-Etikett-Tag nach einem der Ansprüche 1 - 4, **dadurch gekennzeichnet, dass** das Etikett-Inlay (6) mit einer Fischgräten-Stanzlinienstruktur (10) versehen ist.

6. RFID-Etikett-Tag nach einem der Ansprüche 1 - 5, **dadurch gekennzeichnet, dass** eine innere Oberfläche (2'') der Schleife (2) mit mehreren Verschleißschutzrippen (5) versehen ist und das Etikett-Inlay (6) eine Öffnung (6'), die Platz für die mehreren Verschleißschutzrippen (5) bietet, aufweist.

7. RFID-Etikett-Tag nach einem der Ansprüche 1 - 6, **dadurch gekennzeichnet, dass** die vormontierte Form so eingerichtet ist, dass sie die bevorzugte Form des RFID-Etikett-Tags (1) darstellt, so dass das RFID-Etikett-Tag (1), wenn es nicht montiert ist, automatisch die vormontierte Form annimmt.

8. RFID-Etikett-Tag nach einem der Ansprüche 1 - 7, **dadurch gekennzeichnet, dass** die Schleife (2) und die beiden flachen Teilhälften (3', 3") im Wesentlichen aus Polycarbonat, insbesondere aus ABT-Material, bestehen.

9. RFID-Etikett-Tag nach einem der Ansprüche 1 - 8, **dadurch gekennzeichnet, dass** zumindest eine erste flache Teilhälfte (3') der flachen Teilhälften (3', 3") einen ersten Vorsprung (11) aufweist, der in eine Öffnung (12), die in einer zweiten flachen Teilhälfte (3'') der flachen Teilhälften (3', 3") vorgesehen ist, passgenau hineinpasst und sich durch diese hindurch erstreckt, wenn die beiden flachen Teilhälften zusammengefügt sind.

10. RFID-Etikett-Tag nach Anspruch 9, **dadurch gekennzeichnet, dass** sich benachbart zu dem ersten Vorsprung (11) und an seiner der Schleife (2) abgewandten Seite ein zweiter Vorsprung (13) mit einer geringeren Größe als der erste Vorsprung (11) befindet, wobei der zweite Vorsprung (13) mit einem Hakenteil (13') zum Einrasten hinter einem Rand (12') der Öffnung (12) ausgestattet ist.

11. RFID-Etikett-Tag nach einem der Ansprüche 1 - 10, **dadurch gekennzeichnet, dass** zumindest eine flache Teilhälfte (3') der beiden flachen Teilhälften (3', 3") mit mehreren hakenförmigen Klammern (14) versehen ist, die, wenn die beiden flachen Teilhälften (3', 3") miteinander verbunden werden, hinter Kanten der anderen flachen Teilhälfte (3") der beiden flachen Teilhälften (3', 3") einrasten.

12. RFID-Etikett-Tag nach einem der Ansprüche 1 - 11, **dadurch gekennzeichnet, dass** die beiden flachen Teilhälften (3', 3") von der Schleife (2) beabstandete Enden (15', 15'') aufweisen, die mit zusammenwirkenden Verschlusseinrichtungen (16, 17) versehen sind, um die montierte Form des RFID-Etikett-Tags (1) zu sichern.

13. RFID-Etikett-Tag nach Anspruch 12, **dadurch gekennzeichnet, dass** die zusammenwirkenden Verschlusseinrichtungen (16, 17) auf dem einen Teil einen Zapfen (18) und auf dem anderen Teil eine Aufnahme (19) für den Zapfen (18) aufweisen, wobei der Zapfen (18) einen Kopf (20) aufweist, der von zwei Säulen (21) getragen wird, die an einer flachen Teilhälfte (3") der beiden flachen Teilhälften (3', 3") montiert sind, und wobei die Aufnahme (19) mit einem Kragen (22) versehen ist, der die Aufnahme (19) auf der anderen flachen Teilhälfte (3') der beiden flachen Teilhälften (3', 3") umgibt, um den in der Aufnahme (19) aufzunehmenden Kopf (20) zu führen, und wobei der Kopf (20) so dimensioniert ist, dass er in den Kragen (22) und die Aufnahme (19) passt.

14. RFID-Etikett-Tag nach Anspruch 13, **dadurch gekennzeichnet, dass** die Säulen (21) an Stützen (23) montiert sind, die an einer flachen Teilhälfte (3") der beiden flachen Teilhälften (3', 3") vorgesehen sind.

15. RFID-Etikett-Tag nach Anspruch 13 oder 14, **dadurch gekennzeichnet, dass** die Säulen (21) so dimensioniert sind, dass sie brechen, wenn auf den Kopf (20) eine vorgegebene Seitenkraft ausgeübt wird.

## Revendications

1. Etiquette RFID (1) pour l'authentification d'un récipient de plante comprenant une boucle (2) qui est dimensionnée pour s'adapter parfaitement autour d'une partie du récipient de plante, ladite étiquette RFID (1) comprenant en outre une partie plate (3) raccordée à la boucle (2), où la partie plate (3) est prévue avec une puce RFID (8), où l'étiquette RFID (1) comprend une forme pré-montée où la boucle (2) est ouverte pour recevoir une partie du récipient de plante et où la partie plate (3) est séparée en deux moitiés de partie plate (3', 3"), lesdits moitiés de partie plate (3', 3") étant raccordées à la boucle (2) sur ses côtés opposés, et une forme montée où la boucle (2) est fermée et agencée pour s'adapter parfaitement autour de la partie du récipient de plante lorsque les deux moitiés de partie plate (3', 3") sont assemblées, où les deux moitiés de partie plate (3', 3") sont prévues avec une incrustation d'étiquette (6) supportée par les deux moitiés de partie plate (3', 3"), où l'incrustation d'étiquette (6) est collée sur les deux moitiés de partie plate (3', 3"), **caractérisée en ce qu'**une surface de l'incrustation d'étiquette (6) orientée à l'opposé des deux moitiés de partie plate (3', 3") sur laquelle l'incrustation d'étiquette (6) est collée, est également prévue avec de la colle de manière à ce que, lorsque les deux moitiés de partie plate (3', 3") sont assemblées, la surface de l'incrustation d'étiquette (6) orientée à l'opposé des deux moitiés de partie plate (3', 3") est collée sur elle-même.

2. Etiquette RFID selon la revendication 1, **caractérisée en ce que** les deux moitiés de partie plate (3', 3') supportent chacune une partie ou des parties d'une antenne (7', 7", 7"'), lesquelles parties de l'antenne se raccordent toutes à la puce RFID (8) lorsque les deux moitiés de partie plate (3', 3") sont assemblées, et où, dans la forme pré-montée, seule une partie (7"') de ladite antenne (7', 7", 7"') se raccorde à la puce RFID (8).

3. Etiquette RFID selon la revendication 1 ou 2, **caractérisée en ce que** où les deux moitiés de partie plate (3', 3") sont assemblées, entre lesdites deux moitiés de partie plate (3', 3"), une mousse (9) est prise en sandwich pour empêcher l'entrée de l'eau.

4. Etiquette RFID selon l'une quelconque des revendications 1 à 3, **caractérisée en ce que** l'incrustation d'étiquette (6) comprend une antenne (7', 7", 7"') et la puce RFID (8).

5. Etiquette RFID selon l'une quelconque des revendications 1 à 4, **caractérisée en ce que** l'incrustation d'étiquette (6) est prévue avec une structure découpée (10) en forme de chevron.

6. Etiquette RFID selon l'une quelconque des revendications 1 à 5, **caractérisée en ce qu'**une surface interne (2") de la boucle (2) est prévue avec une pluralité de nervures anti-usure (5), et l'incrustation d'étiquette (6) comprend une ouverture (6') fournissant de l'espace pour la pluralité de nervures anti-usure (5).

7. Etiquette RFID selon l'une quelconque des revendications 1 à 6, **caractérisée en ce que** la forme pré-montée est agencée pour représenter la forme préférée de l'étiquette RFID (1), de sorte que lorsqu'elle n'est pas montée, l'étiquette RFID (1) reprend automatiquement la forme pré-montée.

8. Etiquette RFID selon l'une quelconque des revendications 1 à 7, **caractérisée en ce que** la boucle (2) et les deux moitiés de partie plate (3', 3") sont sensiblement réalisées à partir de polycarbonate, en particulier d'un matériau à base de ABT.

9. Etiquette RFID selon l'une quelconque des revendications 1 à 8, **caractérisée en ce qu'**au moins une première moitié de partie plate (3') des moitiés de partie plate (3', 3") a une première saillie (11) qui s'adapte parfaitement dans et s'étend à travers une ouverture (12) prévue dans une seconde moitié de partie plate (3") des moitiés des parties plates (3', 3") lorsque les deux moitiés de partie plate sont assemblées.

10. Etiquette RFID selon la revendication 9, **caractérisée en ce que**, de manière adjacente à la première saillie (11) et au niveau de son côté orienté à l'opposé de la boucle (2), est présente une seconde saillie (13) avec une plus petite taille que la première saillie (11), où la seconde saillie (13) est équipée avec une partie de crochet (13') pour s'encliqueter derrière un bord (12') de l'ouverture (12).

11. Etiquette RFID selon l'une quelconque des revendications 1 à 10, **caractérisée en ce qu'**au moins une moitié de partie plate (3') des deux moitiés de partie plate (3', 3") est prévue avec plusieurs pinces en forme de crochet (14) qui, lorsque les deux moitiés de partie plate (3', 3") sont assemblées, s'encliquettent derrière les bords de l'autre moitié de partie plate (3") des deux moitiés de partie plate (3', 3").

12. Etiquette RFID selon l'une quelconque des revendications 1 à 11, **caractérisée en ce que** les deux moitiés de partie plate (3', 3") ont des extrémités (15', 15") qui sont distantes de la boucle (2), qui sont prévues avec des installations de fermeture (16, 17) coopératives afin de fixer la forme montée de l'étiquette RFID (1).

13. Etiquette RFID selon la revendication 12, **caractérisée en ce que** les installations de fermeture (16, 17) coopératives comprennent, sur ladite une partie, une cheville (18) et, sur l'autre partie, un réceptacle (19) pour la cheville (18), où la cheville (18) comprend une tête (20) supportée par deux piliers (21) montés sur une moitié de partie plate (3") des deux moitiés de partie plate (3', 3"), et où le réceptacle (19) est prévu avec un collier (22) entourant le réceptacle (19) sur l'autre moitié de partie plate (3') des deux moitiés de partie plate (3', 3") afin de guider la tête (20) pour être reçue dans le réceptacle (19), et où la tête (20) est dimensionnée pour s'adapter à l'intérieur du collier (22) et du réceptacle (19).

14. Etiquette RFID selon la revendication 13, **caractérisée en ce que** les piliers (21) sont montés sur des supports (23) prévus sur une moitié de partie plate (3") des deux moitiés de partie plate (3', 3").

15. Etiquette RFID selon la revendication 13 ou 14, **caractérisée en ce que** les piliers (21) sont dimensionnés pour se casser lorsqu'une force latérale prédéterminée est appliquée sur la tête (20).
